# EUROPEAN PATENT SPECIFICATION

(11) **EP 2 689 129 B1**
(45) Date of publication and mention of the grant of the patent: **17.01.2018**
(21) Application number: 12713247.0
(22) Date of filing: 26.03.2012
(51) Int. Cl.: F03D 3/00, F03D 3/02, F03D 3/04, F03D 7/06

(54) **SAVONIUS WIND TURBINE**
SAVONIUS-WINDTURBINE
ÉOLIENNE SAVONIUS

(30) Priority: 24.03.2011 GB 201104929
(43) Date of publication of application: 29.01.2014
(73) Proprietor: The Liverpool Renewable Energy Research Centre, Widnes WA8 4UN (GB)
(72) Inventor: MURPHY, Gary, Widnes WA8 4UN (GB)
(74) Representative: Aldridge, Christopher Simon
(86) International application number: PCT/GB2012/000276
(87) International publication number: WO 2012/127196

(56) References cited:
- EP-A1- 1 925 819
- EP-A2- 1 890 033
- WO-A2-2008/108637
- WO-A2-2009/009567
- WO-A2-2010/106337
- US-A1- 2009 224 552

## Description

The present invention relates to energy generation and particularly to wind turbines.

A significant amount of effort is currently being made to harness the energy from wind or other fluid flows such as rivers or streams and convert the harvest energy into electricity.

To capture and convert large amount of energy from wind or water flows currently requires specific structures to be constructed which usually have to be in remote areas or in situations such as, for example, offshore wind farms. Such remote locations require excessive cable networks and create difficulties in carrying out maintenance procedures. Accordingly, such systems are relatively expensive.

Moreover, the structures required to harvest the wind energy needs to be mounted at a significant height, which often requires controversial planning permission procedures. Known windfarms are also unknown to be relatively noisy and have been known to interfere with radar systems if situated close to airports.

Due to the rapid development of the renewable energy generation industry, the infrastructure used for the distribution of electricity is not always capable of carrying the required amount of electricity from the point generation to the point of consumption at the time when it is most needed.

US2009/224552 discloses an example of wind turbine arrangement with multiple Savonius turbines.

Connecting large wind farms to the National Grid and transferring our trusty across large distances is becoming more complicated as the number of wind farms increases.

It is therefore desirable in the industry for there to be smaller, more efficient wind turbines which are just as suitable for use in urban environments as they are in rural environments and offshore windfarms.

According to the present invention there is provided an arrangement comprising a plurality of wind turbines of the savonius type, having a rotatable member extending along a longitudinal axis and a plurality of blades extending radially outwards from the rotatable member and spaced apart around the circumference thereof, the rotatable member being arranged such that, in normal use, the longitudinal axis extends in a substantially vertical direction and the blades travel around the longitudinal axis according to claim 1.

The arrangement further comprises a wind deflector operable to deflect wind to provide a sheltered region for the blades as they travel towards the wind and thereby substantially reducing the drag induced on the turbine.

The deflector is advantageously shaped to direct wind into an active region in which a blade is positioned to capture the wind.

The wind turbine advantageously further comprises means for controlling the position of the deflector such that, in use, it is correctly positioned to provide the sheltered region and deflect wind towards the active region for any direction of wind.

The wind deflector is advantageously mounted to rotate around the longitudinal axis.

The means for controlling the position of the deflector may comprise the aerodynamic external shape of the wind deflector.

Alternatively, or additionally, the means for controlling the position of the deflector may comprise a wind direction sensor, a processor and a motor, wherein the wind direction sensor is operable to detect the direction of the wind and provide a corresponding predetermined signal to the processor which controls the motor to rotate the wind deflector into the correct position.

According to the present invention there is provided a wind turbine system comprising a plurality of wind turbines according to claim 1. The wind deflector of one of the turbines advantageously deflects wind towards the active region of an adjacent turbine.

According to the present invention there is provided an architectural module comprising a wind turbine according to the wind turbine system according to claim 11. According to the present invention there is provided fence comprising a wind arrangement turbine according claim 12. In order to make turbines more environmentally acceptable the present invention incorporates one or more turbines as part of the construction of the building, wall perimeter fence or signage.

An electrical generator may be installed within the housing containing the turbine blades or, alternatively, a generator may be installed remotely at a distance away from the housing whereby energy is transferred to the generated by means of a fluid transfer system or mechanical means for electrical means.

To conserve raw materials and cut back on energy consumption the turbines of the present invention may be used to drive an electrical generator, which may be a new or recycled automotive alternator.

The present invention will now be described with reference to the accompanying drawings, in which:
Figure 1 is a drawing of a wind turbine according to the present invention which is attached to a plurality of pumps;
Figure 2 is a drawing of an exploded view showing the turbine blades to a driveshaft of the wind turbine of figure 1;
Figure 3 is a drawing of a plan view showing how the outer edge of the turbine blades are formed;
Figure 4 is a drawing showing the bearing housings supporting the turbines;
Figure 5 is a drawing showing a plurality of pumps connected to a turbo generator;
Figure 6 is a drawing showing a plurality of turbines supported within a framework;
Figure 7 is a drawing showing gearboxes attached to the turbine drive shafts;
Figure 8 is a drawing showing a turbine housing attached to rotating means;
Figure 9 is a drawing showing wind deflector is used to direct the flow of wind;

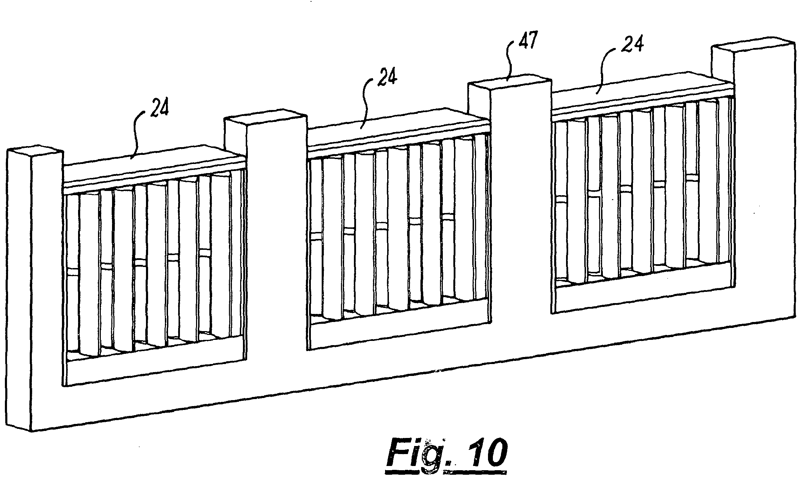

Figure 10 is a drawing showing turbine housings incorporated into a wall of a building; and
Figure 11 is a drawing of a mechanism used to rotate the deflector about an axis.

Referring to the drawings, a wind turbine, according to the present invention, may be used independently or in a wind turbine system comprising of wind turbines. Such a wind turbine system is housed in a supporting framework. The turbines are used to harness the force from the flow of fluid such as wind or other fluid such as the water of rivers or streams. The energy is transformed into mechanical energy, which is then used to provide a force to drive an electrical generator. An electrical control panel 1 controls the system hereinafter described.

The control panel 1 processes signals from a plurality of sensors suitably disposed about the turbines. The signals are processed by a solid-state an atomic circuit in combination with a dedicated central processing unit running a computer program. Conditional output from the control panel 1, which depend upon signals received from the sensors, are used to operate and control a plurality of parameters and devices with the wind turbine system.

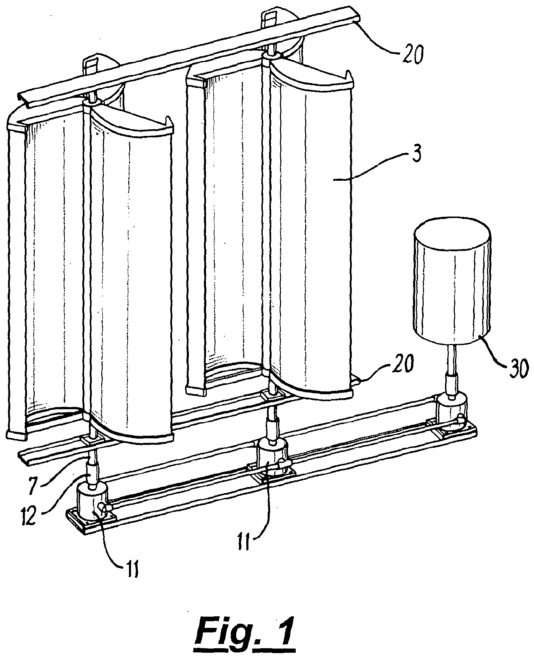

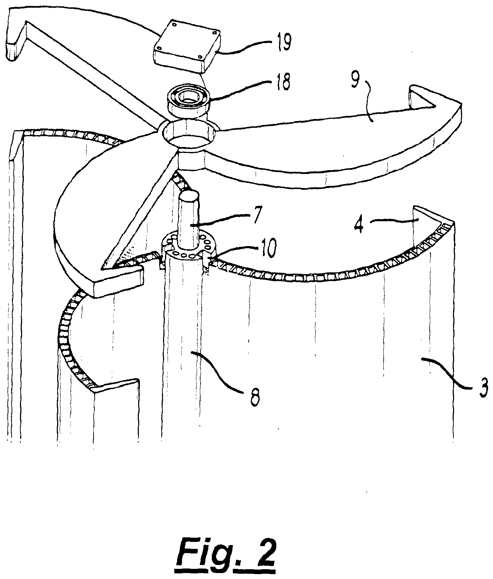

Referring to figure 1, a turbine is shown for harnessing energy from the flow of fluids. A supporting framework 20 supports a plurality of turbines 2 each turbine 2 has a plurality of turbine blades 3. Each turbine 2 rotates on a driveshaft 7. Each driveshaft 7 is connected to a fluid pump 11 by coupling means 12. Each driveshaft 7 is fitted with a plurality of turbines 2. Referring to figure 2, the turbine drive shaft 7 is provided to transfer forces from the turbine 2 to the pumping means 11. The turbine blades 3 are attached to the driveshaft 7 by a connecting sleeve 8. The connecting sleeve 8 has grooves 10 formed with in it to allow for the turbine blades 3 to be installed into the correct position.

Alternatively, the turbine blade 3 and the turbine drive shaft sleeve 8 may be extruded as a single component.

In order to prevent the turbine 3 distorting, due to centrifugal forces or forces applied by the flow of fluid, support means 9 may be attached at each end of the turbine blade 3.

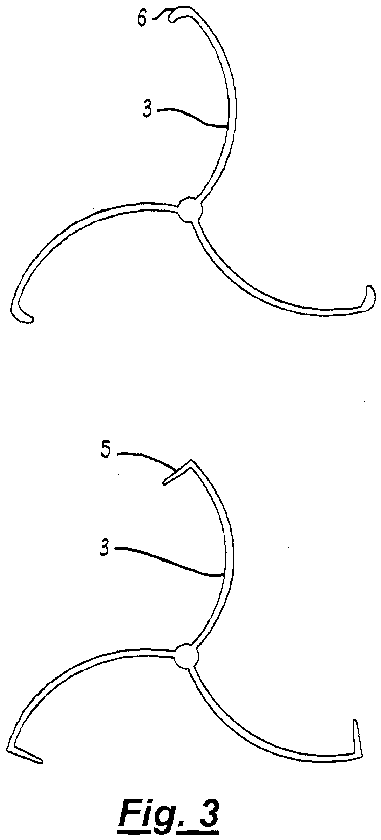

Referring to figure 3, a trailing edge 4 is formed the outer edge of each turbine blade 3. The trailing edge 4 may have a straight edge 5.

Alternatively, the trailing edge 4 may have a curved edge 6.

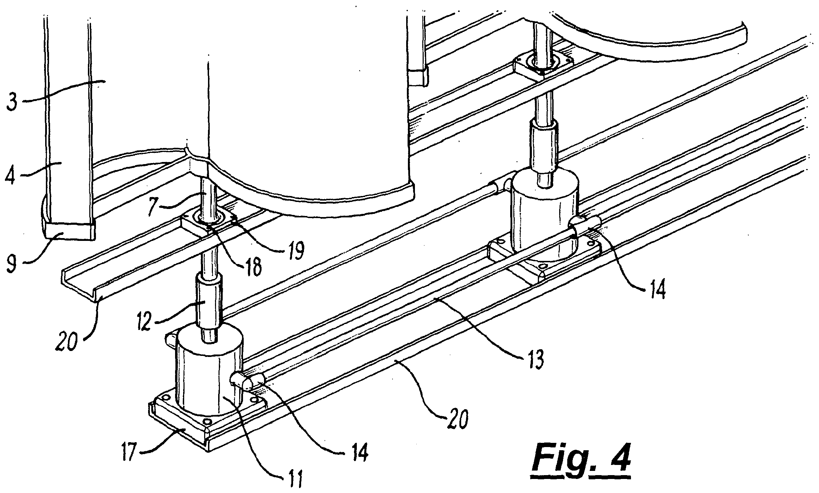

Referring to figure 4, each driveshaft 7 rotates between a plurality of bearings 18. The bearings 18 are held in position by a means of support 19. The bearing support 19 is attached to the supporting framework 20 attachment means 21. In this way, a plurality of drive shafts 7 may be attached to the supporting framework 20. The pumping means 11 is attached to the main framework 20 by an attachment means 17.

Referring again to figure 4, the drive shaft 7 is attached to pumping means using a coupling 12. When the flow of fluid applies a force to the turbine blade 3 the forces are transferred to the driveshaft 7. The rotational forces of driveshaft 7 are transferred to the pumping means 11. Each turbine driveshaft 7 is connected to a single pump 11. In this way, a large number of individual turbines can be pumped under pressure through common pipework 13 to a single turbo generator 30.

The turbo generator 30 may be remotely situated at a distance away from the turbine housing 24 and the fluid from the pumping system contained within the pipework 13 may be transferred to the turbo generator 30 under pressure.

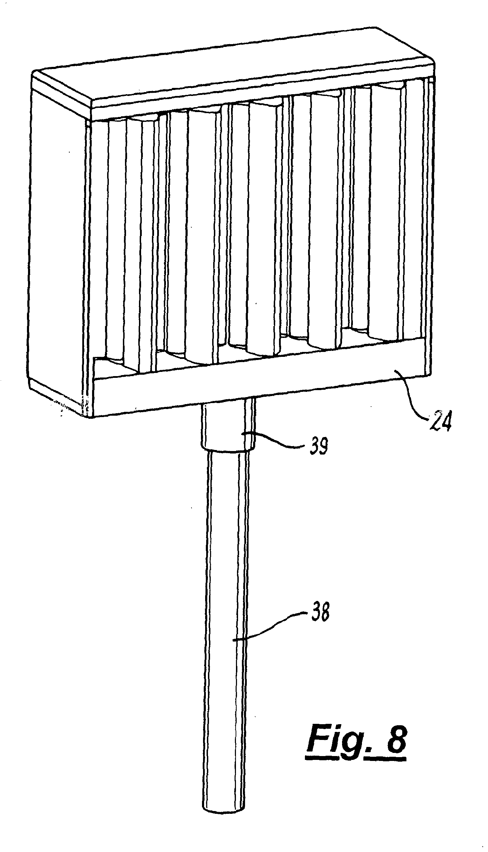

Referring to figure 8, a single housing 24 attached by means of rotation 39 to post 38 enables the housing to face the flow of fluid and is controlled by signals being received and transmitted from the control panel 1.

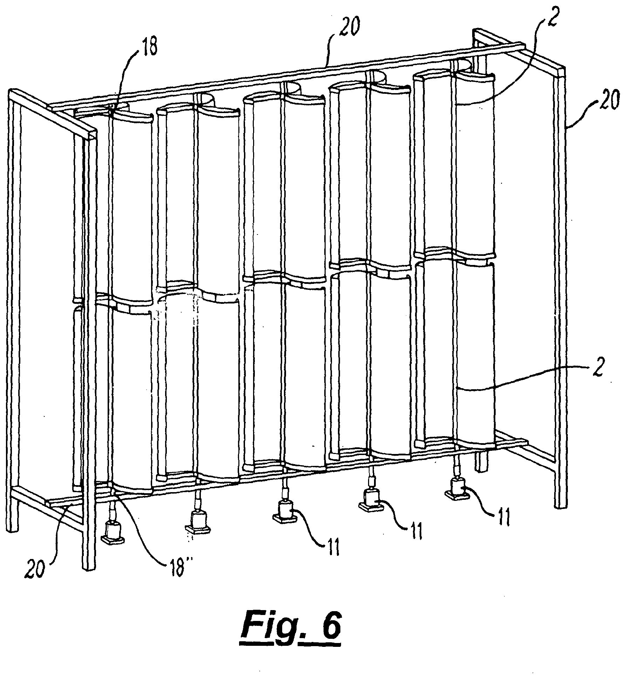

Referring to figure 6, a single framework 20 supports a number of turbines 2. Therefore, a number of turbines 2 may be housed within a single housing 24. A plurality of housings 24 are connected by a common pipework 13. In this way, a very large number of individual turbines 2 may be used to pump fluid through a common pipework 13 to a single turbo generator 30.

The connecting pipes 13 are connected to the pumping means 11 using attachment means 14. Alternatively, the pumping means 11 may be attached to a manifold 15 by attachment means 16.

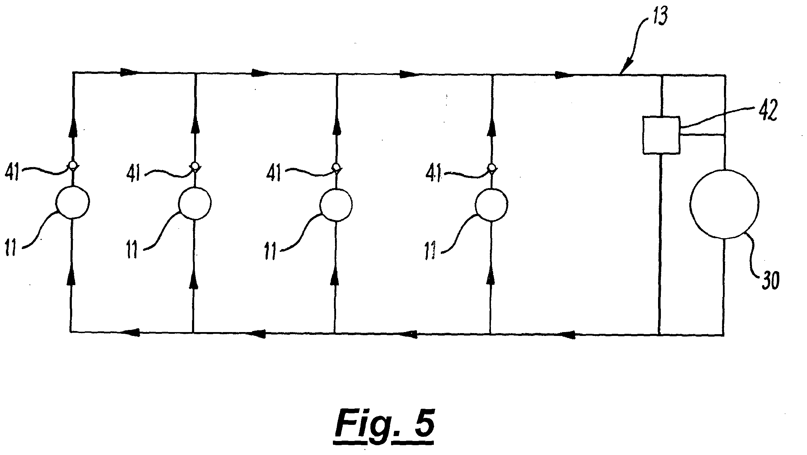

Referring to figure 5, a control valve 42 is fitted to control the flow of fluid to and from the turbo generator 30. Electrical signals from the control panel 1 used to operate and control the control valve 42.

A plurality of sensors may be fitted at different points within the pumping system 31 to provide the control panel 1 with signals to enable the control panel 1 to determine the flow rates of fluid within the pumping system 31.

A plurality of pumps 11 are connected within a pumping system 31. To increase efficiency and avoid unwanted losses of energy a non-return valve 41 is fitted to the output 27 pumping means 11. In this way, fluid from the output 27, of the pump 11, will be forced and the pressure to travel only into the turbo generator 30.

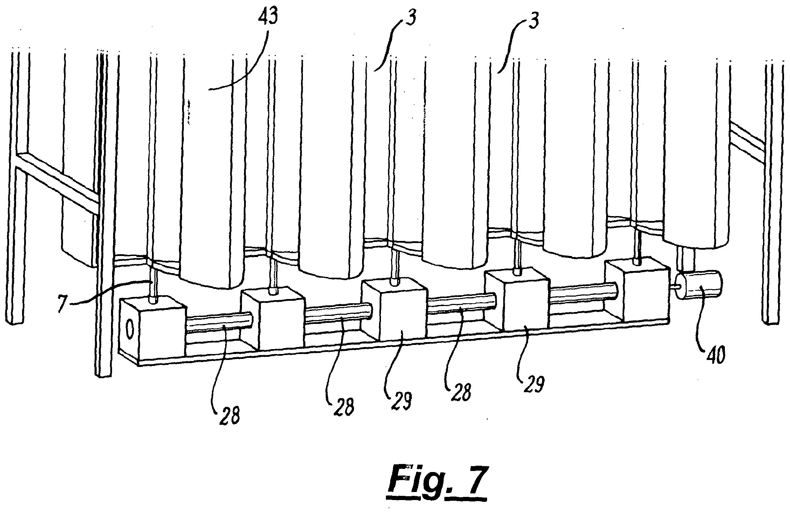

Referring to figure 7, an alternative embodiment includes a gearbox 29. Forces may be transferred between the turbine 2 and the generator 40. When forces are applied to the turbine 2 the rotational forces applied to the driveshaft 7 are transferred through the gearbox 29 to the generator driveshaft 28 which applies a rotational drive force to the generator 40.

A plurality of drive shafts 7 are connected to the main driveshaft 28 by means of a give box 29. Within the gearbox transmission system 29 and overrunning clutch 32 may be fitted, which has an outer driveshaft 33 and an inner driveshaft 34. Only when the inner driveshaft 34 is rotating faster than the outer driveshaft 33 is the transmission of energy possible. In this way, the slow turbine driveshaft 7 will not slow down a faster driveshaft 7.

Alternatively, a variable ratio gear means may be used to transfer energy from turbine driveshaft 7 to generator driveshaft 28. The variable ratio gear means may be controlled by electrical signals from the control panel 1.

Alternatively, a plurality of turbine drive shafts 7 may be connected to the generator 40 and driveshaft 28 by way of a set of pulleys and drive belts.

Within a pulley 35 and overrunning clutch 32 may be fitted which has an outer driveshaft 33 and an inner driveshaft 34. Only when the inner driveshaft 34 is rotating faster than the outer driveshaft 33 is the transmission of energy possible. In this way a slow turbine driveshaft 7 may not slow down a faster driveshaft 7.

The pulley 35, on the turbine driveshaft 7 may be linked to a pulley 44, on the generator driveshaft 28, by a drive belt 36.

The surface area of the turbine blades and the force is being applied to the turbine blades determines the size of the pulley 35 and the pulley 44.

Pulley 45, with a variable diameter, is used to provide a means of speed control in order to increase the efficiency of energy transfer between turbine drive shafts 7 and the generator driveshaft 28.

The variable diameter of the pulley 45 may be controlled by electrical signals from the main control panel 1. The pulley 45 is attached within the transmission system between the driveshaft 7 and the generator driveshaft 28.

Alternatively, an electromagnetic clutch 37 may be used as a disconnection means between the turbine driveshaft 7 and the generator driveshaft 28.

Sensors are fitted to provide the control panel 1 with signals to determine the speed of rotation of each turbine 2. The electromagnetic clutch 37 is controlled by electrical signals from the control panel 1.

A plurality of sensors are fitted within the turbines and let signals are transferred to the main control panel which then determines the best time to activate the electromagnetic clutch.

Alternatively, clutch maybe pneumatically or hydraulically operated by way of a valve 42 which in turn will receive a signal from the main control panel 1, at the appropriate time.

Alternatively, each driveshaft 7 may be attached to an individual electrical generator 40.

To prevent injury or structural damage to the turbines 2, the housing 24 may be fitted with a mesh to restrict access to rotating turbines 2. The size of the holes within the mesh will allow the flow of fluid to apply forces to the turbines 2.

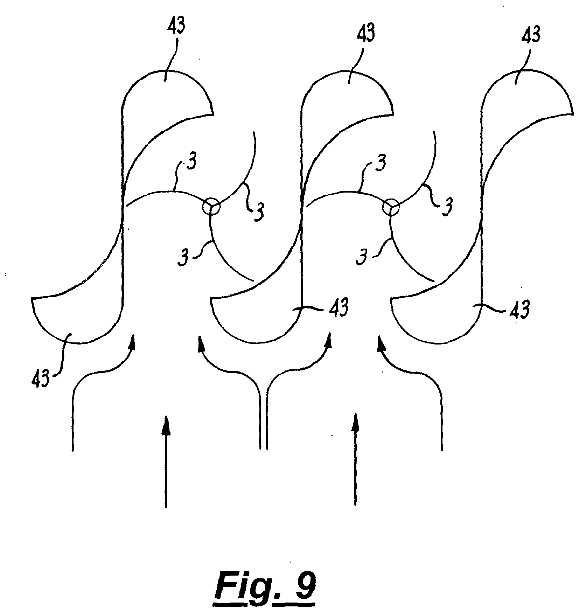

Referring to figure 9, deflectors 43 attached to increase efficiency by directing the flow of fluid tours rotating blade 3, in the direction of rotation - i.e. the flow of wind is directed into region in which the force of the wind is optimised to rotate the turbine.

The deflector 43 also acts as a means of restricting the flow of fluid from being applied to the turbine blade 3 when the turbine blade is travelling towards the incoming flow of fluid - i.e. the deflector provides a sheltered region in its lee such that the effect of the flow of fluid (wind) acting against an oncoming blade is substantially mitigated.

The deflector 43 therefore reduces aerodynamic drag and improves efficiency of the turbine.

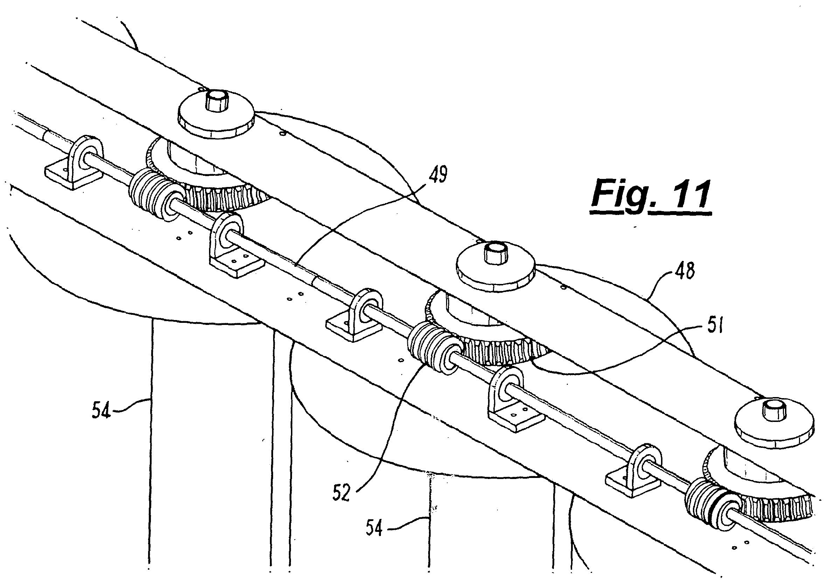

Referring to figure 11, it can be seen how the operation deflectors may be achieved. The uppercase CPU within the control panel 1 provides an electrical signal to drive means 57, such as a motor. The drive means 57 forces to driveshaft 49 to rotate. A worm gear 52 is attached to the driveshaft 49 and is also connected to the bevel gear 51. When the worm gear 52 rotates it forces the bevel gear 51 to rotate. The bevel gear 51 is connected to the deflector led 48 and, therefore, the deflector led 48 which is attached to the deflectors 54, rotates under control of the CPU within the main electrical control panel 1. As such, the deflectors 54 are enabled to direct the flow of wind or fluid onto the turbine blades 3 to provide more efficiency.

Alternatively, deflectors may have an external surface aerodynamically shaped such that external surface is guided towards the oncoming fluid flow without the need for a motor.

## Claims

1. A wind turbine arrangement comprising a plurality of wind turbines (2), of the savonius wind turbine type, each wind turbine (2) having a rotatable member (8) extending along a longitudinal axis and a plurality of blades (3) extending radially outwards from the rotatable member (8) and spaced apart around the circumference thereof and the rotatable member (8) being arranged such that, in normal use, the longitudinal axis extends in a substantially vertical direction and the blades (3) travel around the longitudinal axis, **characterised in that** each of the plurality of turbines (2) is connected to respective pumps (11) and the pumps (11) are all connected to a single turbo generator (30).

2. A wind turbine arrangement, as claimed in claim 1, **characterized in that** the arrangement further comprises a wind deflector (43) operable to deflect wind to provide a sheltered region for the blades (3) as the travel towards the wind and thereby substantially reducing the drag induced on the turbine (2) and **in that** the deflector (43) of each wind turbine (2) is shaped to direct the wind into an active region in which a blade (3) is positioned to capture the wind.

3. A wind turbine arrangement as claimed in claim 2, **characterized in that** the arrangement further comprises means for controlling the position of each deflector (43) such that, in use, it is correctly positioned to provide the sheltered region and deflect wind towards the active region for any wind direction.

4. A wind turbine arrangement as claimed in claim 3, wherein each wind deflector (43) is mounted to rotate around the longitudinal axis of its respective wind turbine (2).

5. A wind turbine arrangement as claimed in claim 3 or 4, wherein the means for controlling the position of the deflectors (43) comprises the aerodynamic external shape of the wind deflector (43).

6. A wind turbine arrangement as claimed in claim 3 or 4, wherein the means for controlling the position of the deflector (43) comprises a wind direction sensor, a processor and a motor, wherein the wind direction sensor is operable to detect the direction of the wind and provide a corresponding predetermined signal to the processor which controls the motor to rotate the wind deflector (43) into the correct position.

7. A wind turbine arrangement as claimed in claims 1 to 6, **characterized in that** the pumps (11) are in fluid communication with the generator (30) via a pipework (13).

8. A wind turbine arrangement according to claim 7, **characterized in that** the arrangement comprises a control valve (42) to control the flow of fluid to and from the generator (30)

9. A wind turbine arrangement as claimed in any one of claims 2 to 6, **characterized in that** wind deflector (43) of one of the turbines (2) deflects wind towards the active region of an adjacent turbine (2).

10. A wind turbine arrangement according to any one of claims 7 to 9, **characterized in that** the generator is remote from the wind turbine housing (24).

11. An architectural module comprising a wind turbine system as claimed in any one of claims 7 to 10.

12. A fence comprising a wind turbine system as claimed in any one of claims 7 to 10.

## Patentansprüche

1. Windturbinenanordnung, aufweisend eine Mehrzahl von Windturbinen (2) des Windturbinentyps Savonius, wobei jede Windturbine (2) ein drehbares Element (8) hat, das sich entlang einer Längsachse erstreckt, und eine Mehrzahl von Schaufeln (3), die sich von dem drehbaren Element (8) radial nach außen erstrecken und rund um dessen Umfang voneinander beabstandet sind, und wobei das drehbare Element (8) so angeordnet ist, dass sich im normalen Einsatz die Längsachse in einer im Wesentlichen vertikalen Richtung erstreckt und die Schaufeln (3) sich um die Längsachse bewegen, **dadurch gekennzeichnet, dass** jede der Mehrzahl von Turbinen (2) mit jeweiligen Pumpen (11) verbunden ist, und alle Pumpen (11) mit einem einzigen Turbogenerator (30) verbunden sind.

2. Windturbinenanordnung nach Anspruch 1, **dadurch gekennzeichnet, dass** die Anordnung ferner einen Windabweiser (43) aufweist, der betreibbar ist, um Wind abzulenken, um einen geschützten Bereich für die Schaufeln (3) bereitzustellen, wenn sie sich zum Wind hin bewegen, und um damit den Luftwiderstand wesentlich zu reduzieren, der auf die Turbine (2) einwirkt, und dadurch, dass der Abweiser (43) jeder Windturbine (2) so geformt ist, dass er den Wind in einen aktiven Bereich leitet, in dem eine Schaufel (3) so positioniert ist, dass sie den Wind aufnimmt.

3. Windturbinenanordnung nach Anspruch 2, **dadurch gekennzeichnet, dass** die Anordnung ferner Mittel zum Steuern der Position jedes Abweisers (43) aufweist, sodass er im Einsatz richtig positioniert ist, um den geschützten Bereich bereitzustellen und Wind für jede Windrichtung zu dem aktiven Bereich hin abzulenken.

4. Windturbinenanordnung nach Anspruch 3, wobei jeder Windabweiser (43) so montiert ist, dass er sich um die Längsachse seiner jeweiligen Windturbine (2) dreht.

5. Windturbinenanordnung nach Anspruch 3 oder 4, wobei das Mittel zum Steuern der Position der Abweiser (43) die aerodynamische äußere Form des Windabweisers (43) aufweist.

6. Windturbinenanordnung nach Anspruch 3 oder 4, wobei das Mittel zum Steuern der Position des Abweisers (43) einen Windrichtungssensor, einen Prozessor und einen Motor aufweist, wobei der Windrichtungssensor betreibbar ist, um die Richtung des Windes zu erfassen und ein entsprechendes vorbestimmtes Signal an den Prozessor bereitzustellen, der den Motor steuert, um den Windabweiser (43) in die richtige Position zu drehen.

7. Windturbinenanordnung nach Anspruch 1 bis 6, **dadurch gekennzeichnet, dass** die Pumpen (11) über eine Rohrleitung (13) mit dem Generator (30) in Fluidverbindung stehen.

8. Windturbinenanordnung nach Anspruch 7, **dadurch gekennzeichnet, dass** die Anordnung ein Regelventil (42) aufweist, um den Fluss des Fluids zu dem und von dem Generator (30) zu regeln.

9. Windturbinenanordnung nach einem der Ansprüche 2 bis 6, **dadurch gekennzeichnet, dass** der Windabweiser (43) von einer der Turbinen (2) Wind zu dem aktiven Bereich einer benachbarten Turbine (2) ablenkt.

10. Windturbinenanordnung nach einem der Ansprüche 7 bis 9, **dadurch gekennzeichnet, dass** der Generator von dem Windturbinengehäuse (24) entfernt angeordnet ist.

11. Architekturmodul, aufweisend ein Windturbinensystem nach einem der Ansprüche 7 bis 10.

12. Umzäunung, aufweisend ein Windturbinensystem nach einem der Ansprüche 7 bis 10.

## Revendications

1. Agencement d'éoliennes comprenant une pluralité d'éoliennes (2) du type Savonius, chaque éolienne (2) possédant un élément tournant (8) s'étendant le long d'un axe longitudinal et une pluralité de pales (3) s'étendant radialement vers l'extérieur à partir de l'élément tournant (8) et espacées autour de la circonférence de celui-ci et ledit élément tournant (8) étant agencé de sorte que, dans des conditions d'utilisation normales, l'axe longitudinal s'étende selon une direction sensiblement verticale et que les pales (3) se déplacent autour de l'axe longitudinal, **caractérisé en ce que** chacune de la pluralité d'éoliennes (2) est reliée aux pompes respectives (11) et les pompes (11) sont toutes reliées à un seul turbo-générateur (30).

2. Agencement d'éoliennes selon la revendication 1, **caractérisé en ce que** ledit agencement comprend en outre un déflecteur de vent (43) utilisable pour dévier le vent afin de fournir une zone abritée pour les pales (3) tandis qu'elles se déplacent vers le vent et ce qui permet de réduire sensiblement la traînée induite sur l'éolienne (2) et **en ce que** le déflecteur (43) de chaque éolienne (2) est façonné pour diriger le vent dans une zone active dans laquelle une pale (3) est positionnée pour capturer le vent.

3. Agencement d'éoliennes selon la revendication 2, **caractérisé en ce que** ledit agencement comprend en outre un moyen pour commander la position de chaque déflecteur (43) de sorte que, lors de l'utilisation, il soit positionné correctement pour offrir une zone abritée et dévier le vent vers la zone active quelle que soit la direction du vent.

4. Agencement d'éoliennes selon la revendication 3, chaque déflecteur de vent (43) étant monté pour tourner autour de l'axe longitudinal de son éolienne respective (2).

5. Agencement d'éoliennes selon la revendication 3 ou 4, ledit moyen de commande de la position des déflecteurs (43) comprenant la forme aérodynamique externe du déflecteur de vent (43).

6. Agencement d'éoliennes selon la revendication 3 ou 4, ledit moyen de commande de la position du déflecteur (43) comprenant un capteur de direction du vent, un processeur et un moteur, ledit capteur de direction du vent étant utilisable pour détecter la direction du vent et fournir un signal prédéfini correspondant au processeur qui commande le moteur pour faire pivoter le déflecteur de vent (43) dans la correcte position.

7. Agencement d'éoliennes selon les revendications 1 à 6, **caractérisé en ce que** les pompes (11) sont en communication fluidique avec le générateur (30) par l'intermédiaire d'une tuyauterie (13).

8. Agencement d'éoliennes selon la revendication 7, **caractérisé en ce que** ledit agencement comprend une vanne de régulation (42) pour réguler l'écoulement du fluide vers le générateur (30) et en provenance de celui-ci.

9. Agencement d'éoliennes selon l'une quelconque des revendications 2 à 6, **caractérisé en ce que** le déflecteur de vent (43) de l'une des éoliennes (2) dévie le vent vers la zone active d'une éolienne à proximité (2).

10. Agencement d'éoliennes selon l'une quelconque des revendications 7 à 9, **caractérisé en ce que** le générateur se situe à distance du boîtier d'éoliennes (24).

11. Module architectural comprenant un système d'éoliennes selon l'une quelconque des revendications 7 à 10.

12. Clôture comprenant un système d'éoliennes selon l'une quelconque des revendications 7 à 10.
